# EUROPEAN PATENT APPLICATION

(11) **EP 1 132 592 A2**
(43) Date of publication of application: **12.09.2001**
(21) Application number: 01104585.3
(22) Date of filing: 06.03.2001
(51) Int. Cl.: F02B 51/02

(54) **The use of an internal catalyser for diesel engines**

(30) Priority: 07.03.2000 AR 0001005
(71) Applicant: Brardinelli, Juan Ignacio, Buenos Aires (AR); Cebeiro, Carlos Haroldo, Buenos Aires (AR); Laurella, Sergio Luis, Buenos Aires (AR); Yaninello, Fernando, Buenos Aires (AR)
(72) Inventor: Brardinelli, Juan Ignacio, Buenos Aires (AR); Cebeiro, Carlos Haroldo, Buenos Aires (AR); Laurella, Sergio Luis, Buenos Aires (AR); Yaninello, Fernando, Buenos Aires (AR)
(74) Representative: Gollob, Ulrik, Dr.

(57) **Abstract**

The invention relates to the use of a catalyser over a ceramic bearing with catalytic quantities of one or more transition metals wherein it is located inside the pre-chamber or combustion chamber, in the injector or in the pre-heater inside a diesel engine.

## Description

The present invention relates to the use of a catalyser over a ceramic bearing with catalytic quantities of one or more transition metals.

Diesel engines belong to vehicles and machinery in the civil, industrial and the agrarian contour. Actually, diesel engines are used in cars, heavy vehicles (such us buses, tractors, trucks) and in industrial and domestic use machinery. They use as fuel a fraction of oil (gas oil), this fuel, when combusted, leaves residues such as carbon dioxide, water and other eventual combustion products, characteristically of this kind of engines, among them: carbon monoxide, elemental carbon (black smoke), non-combusted volatiles, nitrogen oxide, aldehydes and ketones. All these substances, result of an incomplete combustion, have not been energetically proficient in a 100%. Because of this waste of energy, the fuel consumption increases.

Other problems with diesel engines are the loss of heat (near 15%) and the difficulty of working at high r.p.m., due to the fuel and engine characteristics, since the propagation speed of the flame is slow and the piston is not allowed to keep a high speed.

These problems are solved by the use of a catalyser inside the combustion chamber (in any of its components parts) that being in contact with the gases at the moment of the combustion produce an increase of the reaction velocity, because of which the emissions characteristically of an incomplete combustion reduces, as well as the energetic lost decrease, increasing the performance.

The invention refers to the use of a revetment of the chamber or pre-combustion chamber with an adequate bearing (ceramic porous of metallic bath) which carries adhered small quantities of metals that acts as catalysers in the combustion reaction.

In diesel engines with direct injection, the fuel is injected into the combustion chamber; in diesel engines with indirect injection the fuel, before entering into the combustion chamber, is injected into the pre-combustion chamber.

Such pre-combustion chamber is recovered by a specific surface ceramic bearing, similar to the one used for the construction of external catalysers. In order to achieve these, the interior of the pre-combustion chamber is recovered with a ceramic layer with a softening point superior to 1000° C (one thousand degrees Celsius). The piece is submerged in an aluminum hydroxide and zirconium suspension, which gives to the material the desire porousness and specific surface. It is important to note that both the materials used as well as the followed procedures for the placement of the revetment are actually used by the manufacturers of external catalysers for cars.

Over these bearings are added small quantities of rhodium, platinum and palladium, alone or alloyed, and, eventually, accompanied by other metals of similar catalytic function such as copper, silver, aluminum, manganese, zinc, etc. The same procedure can be performed replacing the ceramic bearing by a bath of the following catalytic metals, alone or alloyed: rhodium, platinum, palladium, copper, aluminum, silver, manganese and zinc. Furthermore, this metallic covering could be placed in the combustion chamber over the candle.

When the fuel combustion started, the presence of these metals act as an heterogeneous catalyser, the displacement of the reaction accelerates allowing to increase the r.p.m., supporting the completeness of the combustion, reducing in this way, the production of characteristical substances from an incomplete combustion such as carbon monoxide, elemental carbon (black smoke), non-combusted volatiles, nitrogen oxide, aldehydes and ketones.

## Claims

1. The use of a catalyser over a ceramic bearing with catalytic quantities of one or more transition metals
**characterized in that**
it is located inside the pre-chamber or combustion chamber, in the injector or in the pre-heater inside a diesel engine.

2. The use of a catalyser according to the claim 1,
**characterized in that**
the transition metals used are rhodium, platinum, palladium, copper, aluminum, silver, manganese, zinc, or any other suitable metal.
